# EUROPÄISCHE PATENTSCHRIFT

(11) **EP 0 755 543 B1**
(45) Veröffentlichungstag und Bekanntmachung des Hinweises auf die Patenterteilung: **14.07.1999**
(21) Anmeldenummer: 95917923.5
(22) Anmeldetag: 12.04.1995
(51) Int. Cl.: G06F 15/18

(54) **VERFAHREN ZUR SELEKTION VON ELEMENTEN ZUR SYNTHESE EINER AUS MEHREREN EINZELSCHRITTEN BESTEHENDEN PROBLEMLÖSENDEN EINHEIT**
PROCESS FOR SELECTING ELEMENTS FOR SYNTHESIS OF A PROBLEM-SOLVING UNIT CONSISTING OF SEVERAL STEPS
PROCEDURE DE SELECTION D'ELEMENTS POUR FAIRE LA SYNTHESE D'UNE UNITE DE RESOLUTION DE PROBLEMES EN PLUSIEURS ETAPES

(30) Priorität: 12.04.1994 DE 4412501
(43) Veröffentlichungstag der Anmeldung: 29.01.1997
(73) Patentinhaber: EVOTEC BioSystems Aktiengesellschaft, 22525 Hamburg (DE)
(72) Erfinder: THÜRK, Marcel, D-37083 Göttingen (DE); SCHOBER, Andreas, D-37077 Göttingen (DE)
(74) Vertreter: Hilleringmann, Jochen, Dipl.-Ing.
(86) Internationale Anmeldenummer: EP9501375
(87) Internationale Veröffentlichungsnummer: WO9527946

(56) Entgegenhaltungen:
- WO-A-93/25969
- GB-A- 2 218 834
- 1993 IEEE INTERNATIONAL CONFERENCE ON NEURAL NETWORKS (CAT. NO.93CH3274-8), PROCEEDINGS OF 1993 IEEE INTERNATIONAL CONFERENCE ON NEURAL NETWORKS (ICNN '93), SAN FRANCISCO, CA, USA, 28 MARCH-1 APRIL 1993, ISBN 0-7803-0999-5, 1993, NEW YORK, NY, USA, IEEE, USA, Seiten 191-198 vol.1, KOZA J ET AL 'Performance improvement of machine learning via automatic discovery of facilitating functions as applied to a problem of symbolic system identification'
- PROCEEDINGS OF THE SECOND INTERNATIONAL WORKSHOP ON MULTISTRATEGY LEARNING (MSL-93), PROCEEDINGS OF 2ND INTERNATIONAL WORKSHOP ON MULTISTRATEGY LEARNING, HARPERS FERRY, WV, USA, 26-29 MAY 1993, 1993, FAIRFAX, VA, USA, GEORGE MASON UNIV, USA, Seiten 250-256, DE GARIS H 'Incremental genetic programming and neural net learning: a case study'

## Beschreibung

Die Erfindung betrifft ein Verfahren zur Selektion von Elementen zur Synthese einer aus mehreren Einzelschritten bestehenden problemlösenden Einheit.

Häufig treten komplexe Problemstellungen in den verschiedensten Bereichen auf, die sich mit Hilfe von Computern nicht vollständig oder nur mit großem Aufwand lösen lassen, da sie zu rechenintensiv sind oder gar die Lösungsstruktur fehlt. So gibt es z.B. sehr zeitintensive Aufgaben (Travelling-Salesman-Problem mit mehr als 400 Städten), die sich selbst mit den größten heute verfügbaren Rechnern nicht innerhalb des Lebensalters eines Menschen exakt durch Variation aller Möglichkeiten lösen lassen. Andererseits gibt es Problemstellungen, wo nicht einmal die Lösungsstruktur bekannt ist, z.B. das Protein-Folding-Problem. Aus diesem Grund sucht man nach Methoden, die zum einen in der Lage sind, mindestens sub-optimale Lösungen zu finden, zum anderen Problemstrukturen zu erkennen und wiederum mindestens sub-optimale Lösungsstrukturen zu entwickeln. Das Problem in allen Fällen ist die sogenannte kombinatorische Explosion. Wenn z.B. ein bestimmter Bitstring der Länge 200 gesucht ist, der eine besondere Eigenschaft symbolisieren soll, so müßte man 2²⁰⁰ Möglichkeiten testen, wenn man alle möglichen Lösungen ausprobieren will. Selbst für heutige Superrechner ist eine solche Berechnung während des mittleren Lebensalters eines Menschen unmöglich. Einen Ausweg bieten folgende bereits bekannte Methoden, wobei vorausgesetzt sei, daß sich alle Problemstellungen bzw. die zu optimierenden Parameter geeignet kodieren lassen:

### 1. Genetische Algorithmen

Dieses Verfahren wurde der natürlichen Evolution nachgeahmt. Man nimmt eine Menge von Objekten, die bestimmte Eigenschaften widerspiegeln oder symbolisieren, ordnet jedem Objekt einen Fitnesswert entsprechend der Umgebung (Aufgabenstellung) zu, selektiert eine Untermenge entsprechend der Fitnesswerte und verstärkt (vervielfältigt) diese Untermenge fehlerhaft unter Zuhilfenahme von Rekombinationstechniken. Viele Variationen dieses Grundprinzips, z.B. die Einbeziehung der Parallelisierung, sind in der Literatur beschrieben. Mit diesem Verfahren lassen sich viele Optimierungsaufgaben zufriedenstellend lösen, der Nachteil besteht darin, daß sehr häufig sub-optimale Lösungsstrukturen gefunden werden. Ein anderer Nachteil ist die hohe Rechenintensität.

### 2. Genetische Programmierung

Hier wird auf der Basis genetischer Algorithmen versucht, Algorithmen sich selbst an Aufgabenstellungen adaptieren zu lassen. Beispiele für derartige Algorithmen sind in DE 39 16 328 A1, WO92/05497 und WO93/25969 beschrieben. Die erfolgreichsten Versuche auf dieser Basis wurden bisher durch die sogenannten Classifier-Systeme von John Holland erzielt. Diese Produktionssysteme wurden bisher kaum in der Praxis eingesetzt, da die interne Verschaltung der Produktionen über Gewichtungen nicht unproblematisch ist. Ferner lassen sich viele Problemstellungen nur schwer mit symbolverarbeitenden Systemen lösen (z.B. numerische Aufgabenstellungen).

### 3. Neuronale Netzwerke

Hier verschaltet man "künstliche Neuronen" miteinander und gewichtet die Verbindungen untereinander. Das Lernen von Aufgabenstellungen erfolgt über die Veränderung der Gewichtungen entsprechend vorgegebener Lernregeln. Man erzielt mit dieser Konstruktion bemerkenswerte Ergebnisse. Sogar Börsenkursvorhersagen lassen sich auf langfristiger Zeitskala erlernen. Nachteile der neuronalen Netzwerke sind:
- die Schwierigkeit, sogenannte hochrekursive Probleme lösen zu können,
- die Undurchschaubarkeit der gewonnenen Lösungsstrukturen,
- die Abhängigkeit der Qualität der Lösungen von der Netzwerktopologie und den Lernregeln und
- die Schwierigkeit, symbolverarbeitende Probleme zu lösen.

Neben diesen Methoden gibt es weitere in der Literatur beschriebene Methoden wie z.B. die Gradientenmethode. Auch Mischformen verschiedener Optimierungsstrategien werden verwendet.

Der Erfindung liegt die Aufgabe zugrunde, ein Verfahren zur Selektion von Elementen zur Synthese einer aus mehreren Einzelschritten bestehenden problemlösenden Einheit anzugeben, mit dem sich wesentlich effektiver als im Stand der Technik automatisch Problemlösungen finden lassen.

Zur Lösung dieser Aufgabe ist erfindungsgemäß ein Verfahren nach Anspruch 1 vorgesehen; vorteilhafte Weiterbildungen dieses Verfahrens sind jeweils in den Unteransprüchen angegeben.

Bei dem erfindungsgemäßen Verfahren wird zunächst das zu lösende Problem in Form von Vorgabedaten vorgegeben. Das zu lösende Problem läßt sich durch Einheiten simulieren, die aus einzelnen (Einzel-)Schritten bestehen. Erfindungsgemäß ist vorgesehen, daß es für jeden Einzelschritt eine Vielzahl von Alternativen gibt. Für jeden Einzelschritt wird unter den Alternativen eine ausgewählt und auf diese Weise eine Einheit aus den ausgewählten Einzelschritten aufgebaut und ausgeführt. Das Resultat dieser Ausführung wird mit den Vorgabedaten verglichen. Anhand dieses Vergleichs des Resultats mit den Vorgabedaten kann beurteilt werden, wie gut die Einheit das vorgegebene Problem gelöst hat. Dementsprechend wird jedem Einzelschritt dieser Einheit eine Gewichtung zugeordnet. Diese Gewichtungen werden für jeden alternativen Einzelschritt akkumuliert. Dadurch kann im Vergleich die mittlere Güte oder Performance jeder Alternative festgestellt werden. Danach werden wiederum unter den Alternativen Einzelschritte ausgewählt, um eine andere Einheit zu konstruieren und diese auszuführen. Dabei ist es möglich, daß jeder Einzelschritt geändert wird oder aber daß nur ein einzelner der Einzelschritte geändert wird, d.h. andere Alternativen für diese Einzelschritte ausgewählt werden. Auch hier wird nach Ausführung der Einheit anhand des Vergleichs mit den Vorgabedaten jedem Einzelschritt wiederum eine Gewichtung zugeordnet. Diese Gewichtungen werden, wie oben beschrieben, akkumuliert. Auf diese Weise werden unterschiedlichen Alternativen der Einzelschritte auch unterschiedliche akkumulierte Gewichtungen zugeordnet. Die obige Prozedur wird mehrere Male durchgeführt, bis ein vorgegebenes Grenzkriterium erreicht ist. Ist dies der Fall, wird festgestellt, welche zuvor ausgeführte Einheit das "beste" Resultat erbracht hat. Die Kriterien dafür, was als "bestes" Resultat anzusehen ist, entsprechen einer vorgegebenen Gütefunktion.

Bei dem zuvor erwähnten Grenzkriterium, bei dessen Erreichen die Konstruktion von Einheiten aus unterschiedlichen Einzelschritten beendet wird, handelt es sich erfindungsgemäß entweder um eine Vorgabe für die zulässige Anzahl an Wiederholungen von auszuführenden unterschiedlichen Einheiten, oder um einen Schwellenwert, der die maximal zulässige Resultatsveränderung zweier aufeinanderfolgend ausgeführter Einheiten vorgibt, oder um einen Schwellenwert, der die maximal zulässige Akkumulation für die alternativen Einzelschritte vorgibt.

Das erfindungsgemäße Verfahren ermöglicht letztendlich die evolutive Anpassung von Algorithmen. Die Stärke des erfindungsgemäßen Verfahrens ist darin zu sehen, daß problemlösende Einheiten auf Einzelschrittebene modifiziert werden können. Es werden nicht mehr, wie noch im Stand der Technik, ganze Einheiten aus festgelegten Einzelschritten modifiziert, sondern die Einzelschritte selbst modifiziert, womit die Anzahl an unterschiedlichen Einheiten enorm zunimmt. Mit dem erfindungsgemäßen Verfahren können also Kombinationen von unterschiedlichen Einzelschritten zu Einheiten zusammengefügt werden, wobei die Anzahl an möglichen Kombinationen bei gleicher Anzahl von Alternativen pro Einzelschritt wesentlich größer ist als in dem Fall, in dem man unter Alternativen von Einheiten auswählen kann.

Die Auswahl der Alternativen für jeden Einzelschritt erfolgt vorzugsweise deterministisch, wobei bereits früher konstruierte Einheiten modifizierbar sind, insbesondere durch Austausch ein oder mehrer Alternativen. Dies betrifft die Vorgabe der Auswahl der Alternativen pro Einzelschritt. Die Auswahl innerhalb der Alternativen eines jeden Einzelschritts, d.h. die Wahl einer Alternative für einen Einzelschritt, die dann zusammen mit den Alternativen für die übrigen Einzelschritte die Einheit bildet, erfolgt hingegen zweckmäßigerweise nicht-deterministisch, was beispielsweise mit Hilfe eines Zufallsgenerators realisiert wird. Zeitgleich mit der Abarbeitung eines Einzelschritts wird bei Erreichen des nächsten Einzelschritts aus der Vielzahl von Alternativen für diesen Einzelschritt quasi "online" ausgewählt, und zwar nicht-deterministisch. Alternativ dazu kann vorgesehen sein, daß vor der Ausführung einer Einheit bereits festgelegt ist, welche Alternativen für welche Einzelschritte gewählt worden sind.

Anhand der akkumulierten Gewichtungen für jeden alternativen Einzelschritt bzw. anhand der Mittelwerte der akkumulierten Gewichtungen für jeden alternativen Einzelschritt werden dann für jeden Einzelschritt ein oder mehrere Alternativen selektiert. Hier verfährt man möglicherweise dergestalt, daß die "besten", d.h. die mit der höchsten Gewichtung versehenen Alternativen jedes Einzelschritts ausgewählt werden. Dabei ist jedoch nicht gesagt, daß diese Alternativen der Einzelschritte in Kombination mit im folgenden zu bildenden Alternativen der Einzelschritte zu noch besseren Ergebnissen führt. Dies bleibt vielmehr einem Probierverfahren (try and error) vorbehalten. Durch die Selektion von Alternativen für jeden Einzelschritt werden eine Vielzahl von Alternativen ausgeschieden. Damit man wieder auf eine gewisse Mindestanzahl von Alternativen für jeden Einzelschritt kommt (was Voraussetzung ist, um möglichst viele unterschiedliche Einheiten mit unterschiedlich kombinierten verschiedenen Einzelschritten zu konstruieren), werden die selektierten Alternativen durch nicht-exaktes Kopieren verstärkt, bis die vorgegebene Anzahl von Alternativen für jeden Einzelschritt erreicht ist. Im Anschluß daran werden wieder, wie oben beschrieben, eine Vielzahl von unterschiedlichen Einheiten aus der Menge der Alternativen der Einzelschritte konstruiert, bis das Grenzkriterium erreicht ist, das gemäß obiger Ausführung definiert sein kann. Ist dieses Grenzkriterium erreicht, so werden wieder mehrere Alternativen pro Einzelschritt selektiert, um anschließend die selektierten Alternativen hochzukopieren und wiederum mit der Konstruktion von Einheiten aus der Menge an Alternativen für jeden Einzelschritt fortzufahren. Irgendwann erreicht man bei dieser Prozedur ein zweites Grenzkriterium, bei dem anhand einer Gütefunktion entschieden wird, welche konstruierte Einheit das "beste" Resultat erbracht hat. Auch dieses zweite Grenzkriterium kann, wie oben anhand des ersten Grenzkriteriums angegeben, vorgegeben sein.

Zusätzlich zum oben angesprochenen (Hoch-)Verstärken von selektierten Alternativen können die neuen Alternativen auch durch Hinzufügen oder Tauschen von Alternativen entstehen.

Das erfindungsgemäße Verfahren ist vorstehend für den Fall beschrieben worden, daß das gesamte Problem in Gänze in Form von Vorgabedaten vorgegeben wird. Es ist aber auch denkbar, ein Problem zunächst teilweise vorzugeben, oder, mit anderen Worten ausgedrückt, lediglich einen Teil der Vorgabedaten vorzugeben. Hat man für diesen Teil der Vorgabedaten eine das Problem zufriedenstellend lösende Einheit gefunden, so gibt man den nächsten Teil der Vorgabedaten vor, um anhand der beiden bis dahin vorgegebenen Teile der Vorgabedaten nunmehr eine Einheit aus Einzelschritten zu finden, die wiederum das Problem zufriedenstellend löst. Das Verfahren ist dann beendet, wenn sämtliche Vorgabedaten sukzessive vorgegeben sind und eine das durch diese Vorgabedaten definierte Problem zufriedenstellend lösende Einheit gefunden ist.

Bei dem erfindungsgemäßen Verfahren geht es also darum, Algorithmen zu entwickeln, die beliebige Problemstellungen lösen können. Diese können z.B. numerischer, kombinatorischer, logischer oder auch symbolischer Art sein, wobei die Anwendung in allen Bereichen der Datenverarbeitung möglich ist. Wichtig hierbei ist die Universalität des Verfahrens, d.h. jedes prinzipiell lösbare (berechenbare) Problem kann mit Hilfe dieses Verfahrens gelöst werden. Weitergehend können sogar Computer oder auch Optimierungsverfahren selbst entwickelt oder verbessert werden. Es sollen zudem nicht nur die Lösungsstrukturen entwickelt werden (wie bei den neuronalen Netzwerken), sondern auch die entwickelten Algorithmen analysiert werden können. Somit kann man von den adaptierten Lösungsstrukturen lernen. Die Aufgabe des Benutzers dieses Verfahrens besteht lediglich darin, zulässige Argumente und Nebenbedingungen vorzugeben sowie die sich entwickelnden Lösungen zu bewerten.

Das erfindungsgemäße Verfahren ermöglicht auf der Basis evolutiver Selbstorganisation, daß sich funktionale Untereinheiten (Prozeduren) organisieren lassen. Dabei werden, entsprechend der bottom-up Programmiertechnik, graduell Module (Untereinheiten) entwickelt, die in späteren Entwicklungsstadien verwendet werden können, womit auch hierarchische Programmstrukturen erzeugt werden können (aber nicht müssen). Die Entwicklung dieser Module kann sequentiell aber auch parallel erfolgen. Versuche mit dem Grad der Parallelität haben gezeigt, daß die Parallelität nicht nur die Rechenzeit erniedrigt, sie erhöht auch bei geeignetem Verfahren die Qualität der Lösungen hinsichtlich der Länge und Übersichtlichkeit der ausgebildeten Algorithmen. Im Gegensatz zu herkömmlichen Techniken des genetischen Programmierens wird in diesem Verfahren die evolutive Strategie nicht auf die Computerprogramme (Algorithmen) selbst angewendet, sondern auf deren kleinste funktionale Untereinheiten, die Programmschritte.

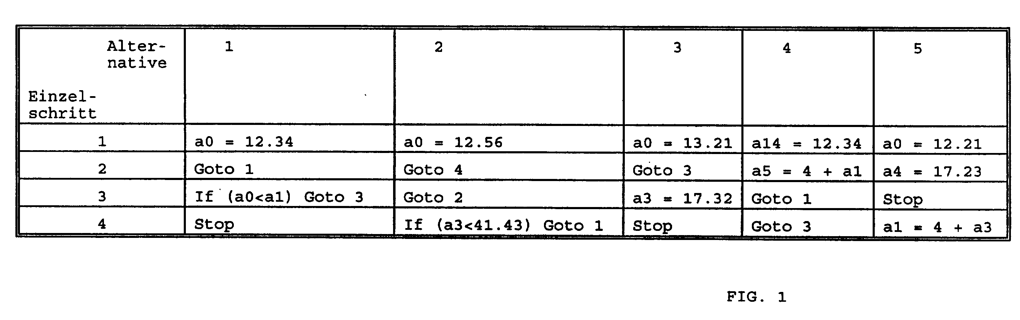

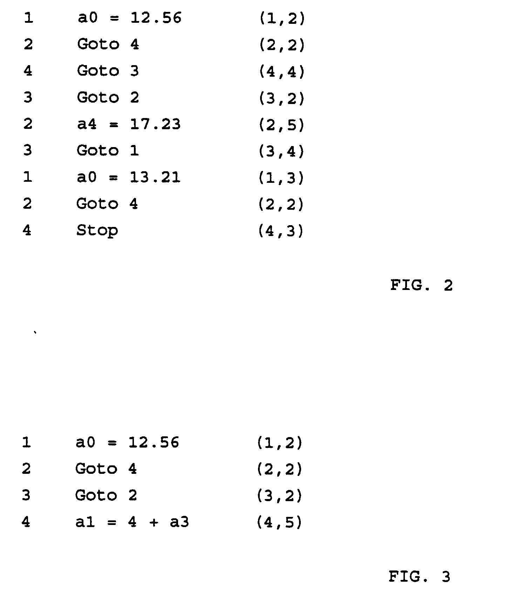

Man startet mit einem (oder auch mehreren) Algorithmus(en), welcher (welche) zunächst mit Hilfe eines geeigneten Zufallszahlengenerators generiert wurde(n), aber auch in bestimmten Teilen vorprogrammiert sein kann (können). Mit der Vorprogrammierung läßt sich sogenanntes Expertenwissen integrieren, welches sich wahlweise übersteuern läßt. Im Gegensatz zu herkömmlichen Techniken wird bei diesem Verfahren mit Alternativen gearbeitet, d.h. für jeden Programmschritt gibt es eine Menge von Alternativen (siehe später Fig. 1). Jede Alternative besitzt eine Gewichtung, die deren Qualität in Abhängigkeit zu den Alternativen anderer Programmschritte anzeigen soll. Es sind verschiedene Verfahren möglich, wie der Anteil jeder Alternative am Gesamtresultat ermittelt werden kann. So kann ein Algorithmus als nicht-deterministisch aufgefaßt werden (siehe später Fig. 2), d.h. erst zur Ausführungszeit wird bestimmt, welche Alternative ausgeführt werden soll (alle Alternativen sind gleichwahrscheinlich). Somit können verschiedene Alternativen während eines Durchlaufs ausprobiert worden sein. Das Arbeiten mit nicht-deterministischen Algorithmen ist zunächst ungewohnt, da bei einer zweimaligen Ausführung desselben Algorithmus mit identischen Startparametern zwei verschiedene Ergebnisse geliefert werden. Es kann jedoch auch deterministisch gearbeitet werden (siehe später Fig. 3), d.h. es wird vor dem Abarbeiten des Algorithmus jeweils eine Alternative pro Programmschritt ausgewählt. Ferner gibt es die Möglichkeit, nicht bei allen Programmschritten neue Alternativen auszuwählen, sie können auch eine Zeitlang konstant bleiben.

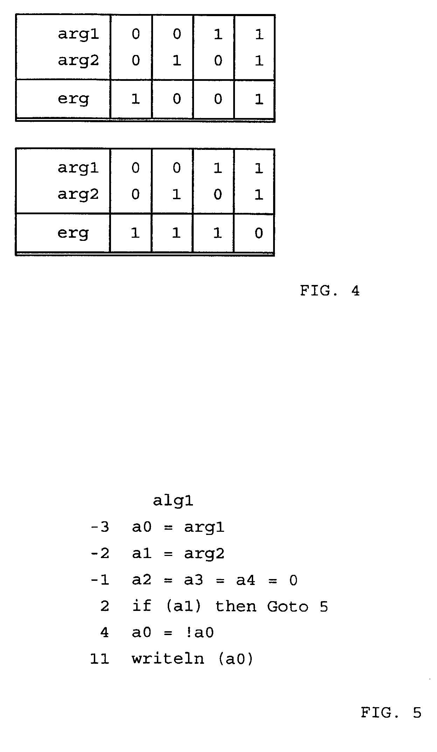

Vor dem Abarbeiten des Algorithmus müssen die Anfangsbedingungen oder Argumente bestimmten Variablen zugeordnet werden (z.B. Befehle 3 bis 1 in Fig. 5). Der Algorithmus wird nun ausgeführt und das Ergebnis wird analysiert. Je nach der Qualität des Ergebnisses werden die bei diesem Durchlauf verwendeten Alternativen bezüglich ihrer Relevanz für das Ergebnis untersucht und deren Gewichtungen entsprechend modifiziert. Man wiederholt dieses Verfahren ausreichend häufig, so daß genügend Kombinationen der Alternativen ausprobiert worden sind. Nun wird über eine evolutive Strategie für jeden Programmschritt und jeden Algorithmus eine Untermenge an Alternativen selektiert und auf die vorgegebene Anzahl von Alternativen verstärkt. Diese Verstärkung darf nicht exakt sein, sie muß Fehler und Rekombination enthalten. Diese Algorithmen werden erneut auf die oben beschriebene Art und Weise ausgeführt und bewertet.

Auf diese Art und Weise gewinnt man ein oder mehrere Algorithmen, die eine gegebene Problemstellung mehr oder weniger befriedigend lösen. nach einer beliebig vorgegebenen Zeit kann man sich entscheiden, ob das Verfahren abgebrochen werden soll oder ob die Lösungen weiter optimiert werden sollen. Die so erzeugten Algorithmen können auch als Module (Prozeduren) interpretiert werden, die nun von anderen Algorithmen aufgerufen bzw. verwendet werden können, die sich auf der oben beschriebenen Art und Weise entwickeln können.

Analog zur Entwicklung dieser modular aufgebauten Programme kann man auch bei der Präsentation von Beispiel- und Lehrdaten verfahren: Man kann "Fenster" über diese Datenbereiche legen und somit Ausschnitte aus dem Lehrmaterial lernen lassen. Im Laufe der Zeit vervollständigt an die Präsentation des Lehrmaterials und ermöglicht somit eine allmähliche Anpassung der Programme an den kompletten Lehrdatensatz.

Iteriert man das gesamte Verfahren, so entstehen prozedurale Algorithmen, die hierarchisch, quasi gleich einer bottom-up Programmierung, organisiert sein können. Läßt man die Möglichkeit zu, daß sich Module selbst aufrufen, lassen sich somit auch hochrekursive Probleme lösen. Alle Lösungen lassen sich leicht bezüglich ihrer Lösungsstruktur analysieren.

Mit dem erfindungsgemäßen Verfahren lassen sich sequentiell oder parallel modular organisierte Algorithmen durch Anwendung von beliebigen Optimierungsstrategien entwickeln, die sowohl auf die sich entwickelnden Module als auch auf die Einzelschritte der Module (Einheiten) angewendet werden. Die Algorithmen können dabei durch beliebig kodierte Zeichenfolgen, beispielsweise Bitfolgen, repräsentiert werden. Die Algorithmen bzw. deren Repräsentanten bestehen aus einer Menge von Programm- oder Einzelschritten, die wiederum aus einer Menge von Alternativen bestehen. Die Algorithmen können in jeder Programmiersprache entwickelt werden (beispielsweise C, Pascal, Prolog, Assembler usw.), die sich durch einen Syntaxbaum beschreiben lassen. Die Algorithmen lassen sich sowohl durch einen Zufallsgenerator erzeugen als auch durch sogenanntes Expertenwissen im vorhinein intergrieren, wobei das Expertenwissen je nach Wahl übersteuert und/oder ergänzt werden kann. Die beiden alternativen Wege zur Ausführung der Algorithmen beziehen sich auf deterministische und nicht-deterministische Konstruktionen von Algorithmen. Im ersten Fall wird für jeden Programmschritt aus der Menge der Alternativen gleichberechtigt eine Alternative selektiert und als aktueller Programm- oder Einzelschritt interpretiert. Im Falle der nicht-deterministischen Konstruktion wird bei der Ausführung des Algorithmus bzw. der Einheit entschieden, welche der gleichberechtigten Alternativen ausgewählt wird. Bei beiden Verfahren spielen die Gewichtungen keine Rolle. In dem Fall, daß mit Repräsentanten gearbeitet wird, wird zu geeigneten Zeitpunkten dekodiert und interpretiert. Die Dekodierung der Repräsentanten verläuft der entsprechenden Programmiersprache entlang der Syntaxbäume. Jedes Programm weist mindestens zwei Variabeln auf, wobei mindestens einer Variablen die Startbedingung, ein Argument oder eine Umgebungsinformation zugeordnet wird und in mindestens einer anderen Variablen das Ergebnis erwartet wird. In Abhängigkeit vom Ergebnis der Gewichtungen lassen sich die Alternativen dann verändern. Nach einer vordefinierten Anzahl von Wiederholungen oder nach Erreichen eines anderweitigen Grenzkriteriums lassen sich die Algorithmen bzw. deren Repräsentanten über evolutive Strategien geeignet modifizieren. Aus der Population der konstruierten Einheiten werden ein oder mehrere geeignete Einheiten ausgewählt und im folgenden dann als Untereinheiten oder Module von anderen sich entsprechend obiger Beschreibung entwickelnden Algorithmen interpretiert. Sämtliche Untereinheiten können parallel dazu durch beliebige Optimierungsstrategien weiter optimiert werden. Die Optimierung der Unterprozeduren kann dadurch ergänzt werden, daß zu bestimmten Zeitpunkten funktional identische Algorithmen entwickelt werden, die sich leichter optimieren lassen, da sie beispielsweise weniger Einzelschritte aufweisen. Das zuvor beschriebene Verfahren kann sowohl sequentiell als auch parallel durchgeführt werden. Die Präsentation der Vorgabedaten kann zunächst ausschnittsweise erfolgen, um dann den vollständigen Vorgabedatensatz erst zu einem späteren Zeitpunkt des Verfahrens anzugeben.

Mit Hilfe des erfindungsgemäßen Verfahrens lassen sich alle eingangs genannten Methoden wie die "neuronalen Netzwerke" erzeugen, d.h. sie können als Lösung eines Optimierungslaufes entstehen. Selbst das hier vorgestellte Verfahren kann als Ergebnis einer Optimierung entstehen oder sich selbst verbessern. Somit bietet das hier vorgeschlagene Verfahren unter den bisher bekannt gewordenen Verfahren die universellste Methode zur Auffindung von Lösungswegen und Lösungen, und zwar aufgrund der Selektion auf Einzelschritt-Ebene der problemlösenden Einheit.

Nachfolgend werden anhand der Figuren Ausführungsbeispiele der Erfindung näher erläutert. Im einzelnen zeigen:
- Fig. 1: ein Beispiel für die Alternativen der Einzelschritte von aus diesen zu konstruierenden Einheiten, wobei insgesamt vier Einzelschritte mit jeweils fünf Alternativen vorgegeben werden,
- Fig. 2: ein Beispiel für eine aus den alternativen Einzelschritten gemäß Fig. 1 aufgebaute Einheit bei nicht-deterministischer Auswahl der Einzelschritt-Alternativen,
- Fig. 3: ein Beispiel für eine aus den Einzelschritt-Alternativen gemäß Fig. 1 konstruierten Einheit bei deterministischer Auswahl der Alternativen für jeden Einzelschritt,
- Fig. 4: zwei vorgegebene Boolsche Aussagetabellen, für die Lösungen zu suchen sind, und
- Fign. 5 und 6: Algorithmen für die Funktionen für die Boolschen Aussagetabellen gemäß Fig. 4.

In Fig. 1 ist in Matrixform aufgeführt, welche alternativen Einzelschritte beispielsweise vorgegeben sein können, um eine problemlösende Einheit zu konstruieren. Dabei sind insgesamt vier Einzelschritte vorgegeben, wobei pro Einzelschritt fünf Alternativen existieren. Diese alternativen Einzelschritte werden nun dem erfindungsgemäßen Verfahren folgend zu Einheiten konstruiert, die mehr als vier Einzelschritte, exakt vier Einzelschritte oder weniger als vier Einzelschritte umfassen können. Fig. 2 zeigt ein Beispiel für einen nicht-deterministischen Ablauf einer derartigen mehrere Einzelschritte umfassenden Einheit. Die Ziffern in der linken Spalte der Fig. 2 geben an, aus welchem Einzelschritt eine Alternative selektiert worden ist. Die mittlere Spalte gibt die Alternativen selbst an, während die Zahlenpaare in der rechten Spalte den alternativen Einzelschritt gemäß Fig. 1 angeben, wobei die erste Zahl den Einzelschritt und die zweite Zahl die Alternative dieses Einzelschritts angibt.

Gemäß Fig. 2 wird beispielsweise bei einem nicht-deterministischen Ablauf eine Einheit mit der Einzelschritt-Alternative 1,2 von Fig. 1 begonnen. Ist dieser Einzelschritt abgearbeitet, so gelangt man zum zweiten Einzelschritt, wobei hier die zweite Alternative dieses Einzelschritts ausgewählt wurde (Goto 4). Dieser Befehl besagt, daß mit einer Alternativen für den vierten Einzelschritt fortgefahren wird. Im vorliegenden Beispiel ist die vierte Alternative für diesen vierten Einzelschritt ausgewählt worden. Auch dies ist ein Sprungbefehl, der zu einer Alternativen des dritten Einzelschritts führt, im vorliegenden Fall zum alternativen Einzelschritt 3,2. Dieser alternative Einzelschritt führt zurück zu Einzelschritt 2, für den die Alternative 5 (a4 = 17.23) gewählt worden ist. Anschließend wird mit einer Alternativen für den dritten Einzelschritt fortgefahren, im vorliegenden Beispiel mit dem Sprungbefehl Goto 1 (Einzelschritt-Alternative 3,4). Dieser Sprungbefehl führt zurück zum ersten Einzelschritt, für den die Alternative 3 gewählt wird. Danach wird mit dem zweiten Einzelschritt fortgefahren, für den in diesem Fall die Alternative 2 gewählt wird (Goto 4). Für den dadurch angesprochenen Einzelschritt 4 wird die Alternative 3 ausgewählt, bei der es sich um einen Stop-Befehl handelt, mit dem die Einheit abgeschlossen ist. Auf die zuvor beschriebene Weise lassen sich nicht-deterministisch eine Vielzahl von Kombinationen von Einzelschritten zu den unterschiedlichsten Einheiten zusammenfügen.

Fig. 3 zeigt ein Beispiel bei deterministischem Ablauf einer Einheit. Begonnen wird bei Einzelschritt 1 mit der Alternativen 2, um dann für Einzelschritt 2 ebenfalls mit der Alternativen 2 fortzufahren. Im Unterschied zum Beispiel gemäß Fig. 2 aber wird jetzt nicht etwa wegen des Sprungbefehls "Goto 4" der vierte Einzelschritt angesprochen, sondern es wird mit Einzelschritt 3 fortgefahren, für den auch wiederum die Alternative 2 vorgegeben wird. Auch hier erfolgt kein Sprungbefehl zum Einzelschritt 2; vielmehr wird mit einer Alternativen des nächsten, nämlich vierten Einzelschritts fortgefahren, bei dem man sich für die Alternative 5 im Beispiel gemäß Fig. 3 entschieden hat.

Wie man leicht erkennen kann, sind die Kombinationsmöglichkeiten bei nicht-deterministischem Ablauf der Einheiten wesentlich größer als bei deterministischem Ablauf, bei dem jede Einheit notwendigerweise aus vier alternativen Einzelschritten besteht.

Daß sich mit Hilfe dieses Verfahrens nicht nur mathematische Probleme lösen lassen, zeigt ein Beispiel aus der Boolschen Algebra. Folgende elementare Alternativen (Einzelschritte) sollen erlaubt sein:
- Sprungbefehl: goto <Zeile>
- Zuweisung: aᵢ = aⱼ (∨,∧) aₖ (logisches und oder)
- Negierung: aᵢ = !aⱼ
- Bedingter Sprung: if (Bed) then goto <Zeile>, wobei (Bed) eine der Möglichkeiten (aᵢ (∨,∧) aⱼ) darstellt
- Ausgabe: writeln (aᵢ)
- Ende: Stop

Gesucht werden Funktionen für die Boolsche Aussagentabelle gemäß Fig. 4.

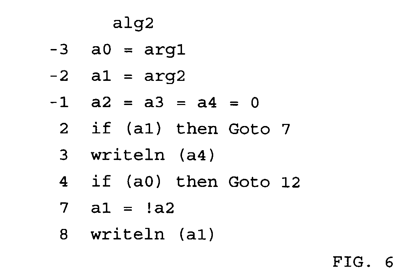

Die entwickelten Algorithmen für beide Probleme sind in den Fign. 5 und 6 dargestellt (Alg1 und Alg2). Es fällt besonders bei Alg2 auf, daß hier ein recht unkonventioneller Algorithmus gefunden wurde (ein Programmierer hätte diesen Algorithmus nicht gewählt).

## Patentansprüche

1. Verfahren zur Selektion von Elementen zur Synthese einer aus mehreren Einzelschritten bestehenden problemlösenden Einheit, bei dem
a) das Problem in Form von Vorgabedaten vorgegeben wird,
b) für jeden Einzelschritt eine Vielzahl von Alternativen vorgegeben wird,
c) aus der Vielzahl von Alternativen für jeden Einzelschritt eine ausgewählt wird und aus diesen ausgewählten Alternativen eine ausführbare Einheit konstruiert wird,
d) die konstruierte Einheit ausgeführt wird und sich dabei ein Resultat ergibt,
e) das Resultat mit den Vorgabedaten verglichen wird,
f) die Einzelschritte der konstruierten und ausgeführten Einheit anhand des Vergleichs des Resultats mit den Vorgabedaten durch Zuordnung von Gewichtungen bewertet werden,
g) die Gewichtungen für jeden alternativen Einzelschritt akkumuliert werden, und zwar dergestalt, daß die mittlere Performance jeder Alternative im Kontext mit den Alternativen anderer Einzelschritte festgestellt wird,
h) die Schritte c) bis g) wiederholt werden, bis ein Grenzkriterium erreicht wird, wobei das Grenzkriterium
- eine Vorgabe für die zulässige Anzahl an Wiederholungen der Schritte c) bis g) ist,
- ein Schwellenwert ist, der die minimal zulässige Resultatsveränderung zweier aufeinanderfolgend ausgeführter Einheiten vorgibt, oder
- ein Schwellenwert ist, der die maximal zulässige Akkumulation für einen alternativen Einzelschritt vorgibt, und
i) festgestellt wird, welche der konstruierten und ausgeführten Einheiten das einer Gütefunktion entsprechend beste Resultat erbracht hat.

2. Verfahren nach Anspruch 1, dadurch gekennzeichnet,
- daß in Schritt b) die Alternativen deterministisch oder nicht-deterministisch vorgegeben werden, im letzten Fall insbesondere mit Hilfe eines Zufallsgenerators generiert werden.

3. Verfahren nach Anspruch 1 oder 2, dadurch gekennzeichnet,
- daß in Schritt c) die Auswahl der Alternativen für jeden Einzelschritt deterministisch erfolgt, wobei bereits früher konstruierte Einheiten modifizierbar sind, insbesondere durch Austauschen ein oder mehrerer Alternativen.

4. Verfahren nach Anspruch 1 oder 2, dadurch gekennzeichnet,
- daß in Schritt c) die Auswahl nicht-deterministisch erfolgt, wobei für jeden auszuführenden Einzelschritt zum Zeitpunkt seiner Ausführung eine der für diesen Einzelschritt geltenden Alternativen zufällig ausgewählt wird.

5. Verfahren nach einem der Ansprüche 1 bis 4, dadurch gekennzeichnet, daß
j) der Mittelwert der akkumulierten Gewichtungen für jeden alternativen Einzelschritt gebildet wird,
k) für jeden Einzelschritt eine oder mehrere Alternativen selektiert werden,
l) die selektierten Alternativen durch nicht-exaktes Kopieren verstärkt werden, bis eine vorgebbare Anzahl von Alternativen für jeden Einzelschritt erreicht ist,
m) die Schritte c) bis l) wiederholt werden, bis ein Grenzkriterium erreicht ist, und
n) danach mit Schritt i) fortgefahren wird.

6. Verfahren nach Anspruch 5, dadurch gekennzeichnet, daß das Grenzkriterium des Schritts m) wie in Anspruch 5 angegeben festgelegt ist.

7. Verfahren nach Anspruch 5 oder 6, dadurch gekennzeichnet, daß zusätzlich zum Verstärken gemäß Schritt l) neue Alternativen durch Hinzufügen oder Tauschen von Alternativen entstehen.

8. Verfahren nach einem der Ansprüche 1 bis 7, dadurch gekennzeichnet, daß
o) in Schritt a) lediglich ein Teil der Vorgabedaten vorgegeben werden,
p) der Schritt b) durchgeführt wird,
q) die Schritte c) bis g) oder die Schritte c) bis l) durchgeführt werden, bis ein Grenzkriterium erreicht ist,
r) weitere oder modifizierte Vorgabedaten vorgegeben werden,
s) unter Berücksichtigung bereits entwickelter problemlösender Einheiten für die zuvor vorgegebenen Vorgabedaten in den Schritten c) bis h) oder in den Schritten c) bis l) problemlösende Einheiten unter Berücksichtigung der erweiterten oder modifizierten Vorgabedaten entwickelt werden und
t) das Verfahren beendet wird, wenn problemlösende Einheiten entwickelt sind, die sämtliche Vorgabedaten berücksichtigen.

9. Verfahren nach Anspruch 8, dadurch gekennzeichnet, daß die Schritte r) und s) wiederholt durchgeführt werden.

## Claims

1. A method for selecting elements for synthesizing a problem-solving unit consisting of a plurality of individual steps, wherein
a) the problem is posed in the form of preset data,
b) a plurality of alternatives is preset for each individual step,
c) one alternative is selected from the plurality of alternatives for each individual step and an executable unit is constructed from these selected alternatives,
d) the constructed unit is executed and a result is obtained therefrom,
e) the result is compared to the preset data,
f) the individual steps of the constructed and executed unit are rated by assigning weightings on the basis of the comparison of the result and the preset data,
g) the weightings for each alternative step are accumulated such that the average performance of each alternative is determined in context with the alternatives of other individual steps,
h) the steps c) to g) are repeated until a limit criterion is met, said limit criterion
- being a preset value for the allowed number of repetitions of the steps c) to g),
- being a threshold value defining the minimum allowed variation in the results of two successively executed units, or
- being a threshold value defining the maximum allowed accumulation for an alternative individual step, and
i) it is determined, which of the constructed and executed units has yielded the best result with respect to a criterion function.

2. The method of claim 1, characterized in
- that, in step b), the alternatives are preset deterministically or non-deterministically, and, in the latter case, are generated in particular with the use of a random-check generator.

3. The method of claim 1 or 2, characterized in
- that, in step c), the selection of the alternatives for each individual step is deterministic, with previously constructed units being modifiable, in particular by substituting one or a plurality of alternatives.

4. The method of claim 1 or 2, characterized in
- that, in step c), the selection is non-deterministic, one alternative valid for this individual step being selected at random for each individual step to be executed, the selection being made at the moment of the execution of this step.

5. The method of one of claims 1 to 4, characterized in that
j) the average value of the accumulated weightings is established for each individual step,
k) one or more alternatives are selected for each individual step,
l) the selected alternatives are amplified by non-exact copying until a presettable number of alternatives is obtained for each individual step,
m) the steps c) to l) are repeated until a limit criterion is met, and
n) thereafter, the process is continued from step i).

6. The method of claim 5, characterized in that the limit criterion of step m) is defined as mentioned in claim 5.

7. The method of claim 5 or 6, characterized in that, in addition to the amplification of step l), new alternatives are generated by adding or exchanging alternatives.

8. The method of one of claims 1 to 7, characterized in that
o) in step a), only a part of the preset data are preset,
p) the step b) is executed,
q) the steps c) to g) or the steps c) to l) are executed until a limit criterion is met,
r) further or modified preset data are preset,
s) in consideration of already developed problem-solving units for the previously preset data in steps c) to h) or in steps c) to l), problem-solving units are developed taking into account the extended or modified preset data, and
t) the process is terminated when problem-solving units are developed that take into account all preset data.

9. The method of claim 8, characterized in that the steps r) and s) are repeatedly executed.

## Revendications

1. Procédé de sélection d'éléments pour effectuer la synthèse d'une unité de résolution de problèmes qui est composée de plusieurs étapes individuelles, dans lequel
a) le problème est posé sous forme de données prédéfinies
b) une série de variantes est donnée pour chaque étape individuelle,
c) l'une des variantes est choisie pour chaque étape dans la série des variantes, et une unité exécutable est construite à partir de cette variante choisie,
d) l'unité construite est exécutée et un résultat est ainsi obtenu,
e) le résultat est comparé aux données prédéfinies,
f) les étapes individuelles de l'unité construite et exécutée sont évaluées, avec attribution de pondérations, par comparaison du résultat avec les données prédéfinies,
g) les pondérations de chaque étape individuelle constituant une variante sont accumulées, d'une manière telle que la performance moyenne de chaque variante est déterminée dans le contexte avec les autres étapes individuelles constituant des variantes;
h) les étapes c) à g) sont répétées jusqu'à ce que soit atteint un critère limite, étant entendu que le critère limite
- est une donnée prédéfinie pour le nombre de répétitions admissible des étapes c) à g)
- est une valeur de seuil qui prédéfinit la variation minimale admissible de résultat de deux unités exécutées successivement, ou
- est une valeur de seuil qui prédéfinit l'accumulation maximale admissible pour une étape individuelle constituant une variante, et
- i) il est déterminé laquelle des unités construites et exécutées a amené un résultat optimal correspondant à une fonction de qualité.

2. Procédé selon la revendication 1, caractérisé en ce que
les variantes sont prédéfinies, à l'étape b), de façon déterministe ou non déterministe, et sont en particulier engendrées dans ce dernier cas à l'aide d'un générateur aléatoire.

3. Procédé selon la revendication 1 ou 2, caractérisé en ce que
le choix des variantes pour chaque étape individuelle est réalisé à l'étape c) de façon déterministe, des unités déjà construites antérieurement étant modifiables, en particulier par substitution d'une ou plusieurs variantes.

4. Procédé selon la revendication 1 ou 2, caractérisé en ce que
le choix est effectué à l'étape c) de façon non déterministe, étant entendu que, pour chaque étape individuelle à exécuter, l'une des variantes valables pour cette étape individuelle est choisie de façon aléatoire à l'instant de son exécution.

5. Procédé selon l'une des revendications 1 à 4, caractérisé en ce que
j) la valeur moyenne des pondérations accumulées est établie pour chaque étape individuelle constituant une variante,
k) une ou plusieurs variantes sont sélectionnées pour chaque étape individuelle,
l) les variantes sélectionnées sont renforcées par une copiage non exact, jusqu'à ce que soit atteint un nombre de variantes définissable au préalable pour chaque étape individuelle,
m) les étapes c) à l) sont répétées jusqu'à ce soit atteint un critère limite,
n) le procédé se poursuit ensuite à partir de l'étape i).

6. Procédé selon la revendication 5, caractérisé en ce que le critère limite de l'étape n) est déterminé de la manière indiquée à la revendication 5.

7. Procédé selon la revendication 5 ou 6, caractérisé en ce que, en plus d'un renforcement selon l'étape l), de nouvelles variantes sont engendrées par addition ou substitution de variantes.

8. Procédé selon l'une des revendications 1 à 7, caractérisé en outre en ce que
a) à l'étape a), seule une partie des données prédéfinies sont prédéfinies,
p) l'étape b) est exécutée,
q) les étapes c) à g) ou les étapes c) à l) sont exécutées, jusqu'à ce que soit atteint un critère limite,
r) des données prédéfinies additionnelles ou modifiées sont prédéfinies,
s) compte tenu d'unités déjà développées de résolution de problèmes pour les données prédéfinies précédemment prédéfinies aux étapes c) à h) ou aux étapes c) à l), des unités de résolution de problèmes sont développées en tenant compte des données prédéfinies élargies ou modifies et
t) le procédé est terminé lorsque sont développées des unités de résolution de problèmes qui prennent en compte toutes les données prédéfinies.

9. Procédé selon la revendication 8, caractérisé en ce que les étapes r) et s) sont exécutées de façon répétée.
